# FASCICULE DE BREVET EUROPEEN

(11) **EP 2 316 628 B1**
(45) Date de publication et mention de la délivrance du brevet: **22.04.2020**
(21) Numéro de dépôt: 10172104.1
(22) Date de dépôt: 06.08.2010
(51) Int. Cl.: B29C 33/00, B29C 33/44, B29C 45/26, B29C 45/56

(54) **Pièce moulée comportant une paroi présentant un trou destiné a recevoir un pilote**
Gussteil mit einer Wand, die ein Loch für die Aufnahme einer Führung umfasst
Moulded part comprising a wall having a hole intended for receiving a guide

(30) Priorité: 27.10.2009 FR 0957512
(43) Date de publication de la demande: 04.05.2011
(73) Titulaire: PSA Automobiles SA, 78300 Poissy (FR)
(72) Inventeur: Demougin, Luc, 92310 Sevres (FR)

(56) Documents cités:
- EP-A1- 1 674 236
- EP-A2- 1 872 925
- FR-A1- 2 788 466

## Description

La présente invention concerne une pièce moulée comportant une paroi présentant un trou réalisé lors du moulage de cette pièce, ledit trou étant destiné à recevoir un pilote pour assembler sur ladite pièce moulée une autre pièce.

Les contraintes liées à la réalisation par moulage de pièces en matière plastique ou en métal sont surtout liées à la direction de moulage.

En effet, le moule est dans le cas simple (et donc le moins coûteux) en deux parties.

Dans chacune d'elles, il ne peut y avoir de zone en contre-dépouille, cela pour permettre le démoulage de la pièce une fois celle-ci mise en forme et refroidie, du moule.

Si une contre-dépouille est nécessaire, il faut compliquer le moule en ajoutant des tirants, coulisseaux, ... des éléments mobiles qui s'extraient pour permettre le démoulage de la pièce.

Ces éléments renchérissent fortement le coût du moule, augmentent le temps de cycle, compliquent et renchérissent également l'exploitation et la maintenance.

D'autre part, lors de l'assemblage sur la pièce moulée d'une autre pièce, il est d'usage, pour bien maintenir en position les pièces, d'utiliser des pilotes, c'est-à-dire des axes cylindriques qui viennent s'engager dans des trous réalisés sur les pièces.

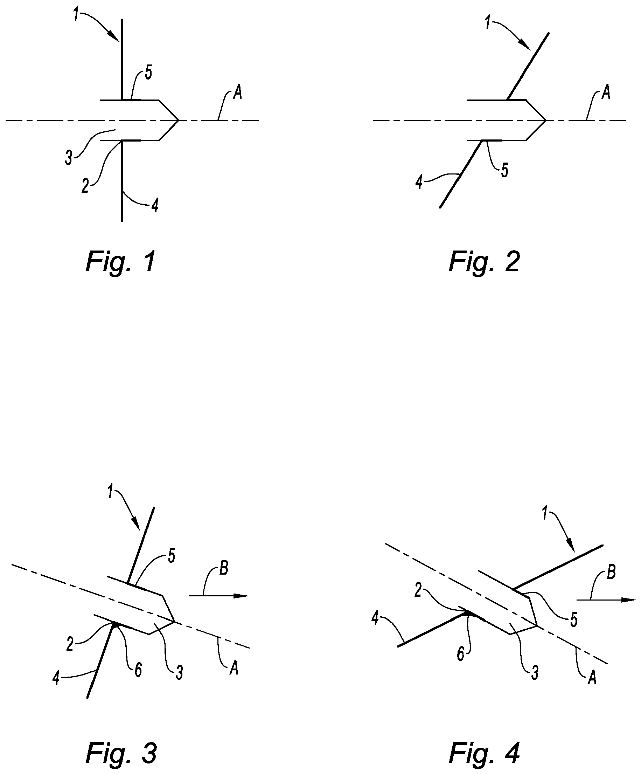

La figure 1 est vue schématique en coupe d'une pièce moulée 1 présentant un trou 2 dans lequel est engagé un pilote 3.

Dans cet exemple, la surface de la paroi 4 de la pièce 1 est perpendiculaire à l'axe A d'engagement du pilote 3 dans le trou 2.

De plus, le trou 2 est entouré par un rebord 5 appelé communément « bord tombé » permettant de guider le déplacement du pilote 3 dans le trou 2.

Une telle bordure 5 est indispensable lorsque, comme montré par la figure 2, la surface de la paroi 4 de la pièce 1 n'est pas perpendiculaire à l'axe A d'engagement du pilote 3 dans le trou 2 de la pièce 1.

Une telle pièce peut être moulée sans difficulté, dans un moule simple, à condition que l'axe de démoulage de la pièce 1 soit confondu avec l'axe A d'engagement du pilote 3 dans le trou 2 de la pièce 1.

Cependant, dans certains cas, l'axe de démoulage de la pièce est différent de l'axe A d'engagement du pilote 3 dans le trou 2 de cette pièce 1.

Ce cas est illustré par les schémas des figures 3 et 4.

Sur ces figures 3 et 4, l'axe de démoulage est désigné par la référence B.

Dans ce cas, la présence du rebord 5 autour du trou 2 de la pièce 1 génère une zone 6 en contre-dépouille qui n'est pas démoulable par un moule simple.

Il est en effet nécessaire dans ce cas d'utiliser un moule complexe, comportant plus de deux parties, beaucoup plus onéreux, rendant plus coûteuse la fabrication des pièces moulées.

La contre-dépouille 6 ci-dessus pourrait être évitée par une surépaisseur de la paroi de la bordure 5 dans la zone en contre-dépouille.

Cependant, cette solution pose un problème de refroidissement de la matière dans le moule qui est difficilement maîtrisé et dans tous les cas augmente la durée de fabrication. Le document EP1674236 A1 divulgue une pièce moulée comportant une paroi présentant un trou réalisé lors du moulage de cette pièce, ledit trou étant entouré par une bordure.

Le but de la présente invention est de remédier aux inconvénients ci-dessus.

Ce but est atteint, selon l'invention, grâce à une pièce moulée selon les caractéristiques de la revendication 1.

Ainsi, la partie de liaison qui est raccordée à la paroi de la pièce supprime la zone en contre-dépouille de la bordure, ce qui permet de démouler la pièce suivant un axe différent de l'axe d'engagement du pilote dans le trou de la pièce.

La pièce moulée selon l'invention peut ainsi être obtenue au moyen d'un moule simple composé de deux parties séparables suivant un axe différent de l'axe du trou de cette pièce.

Par ailleurs, l'évidement formé entre la partie de liaison et la bordure permet de réaliser cette partie de liaison avec une épaisseur réduite, ce qui permet d'éviter les problèmes évoqués plus haut de refroidissement de la matière.

A cet effet, ladite partie de liaison présente une épaisseur qui est sensiblement identique à celle de ladite bordure.

Dans un mode de réalisation, le trou de la pièce moulée est rectangulaire et est entouré par une bordure composée de quatre éléments de bordure, l'un de ces éléments formant un angle avec l'axe de démoulage, tel qu'il est en contre-dépouille par rapport à cet axe, l'extrémité de cet élément étant raccordée avec ladite paroi par un élément de liaison formant un angle avec ledit élément tel que cet élément de liaison ne soit pas en contre-dépouille par rapport à l'axe de démoulage et cet élément de liaison formant avec ladite paroi un évidement qui débouche sur la surface extérieure de la paroi.

L'évidement ci-dessus peut déboucher sur ladite surface de la paroi de la pièce par une ouverture rectangulaire et cet évidement peut présenter dans un plan perpendiculaire à ladite paroi une section sensiblement en V.

De préférence, l'épaisseur de ladite paroi, l'épaisseur des quatre éléments de bordure et l'épaisseur dudit élément de liaison sont sensiblement identiques.

Ces épaisseurs égales permettent de réduire la durée de moulage de la pièce et de ce fait son coût de fabrication.

D'autres particularités et avantages de l'invention apparaîtront encore tout au long de la description ci-après.

Aux dessins annexés, donnés à titre d'exemples, non limitatifs :
- la figure 5 est une vue schématique en coupe transversale d'une pièce moulée selon l'invention présentant un trou dans lequel est engagé un pilote,
- la figure 6 est une vue en perspective montrant le dessus de la pièce selon l'invention et le trou réalisé dans celle-ci,
- la figure 7 est une vue en coupe suivant le plan VII-VII de la figure 6.

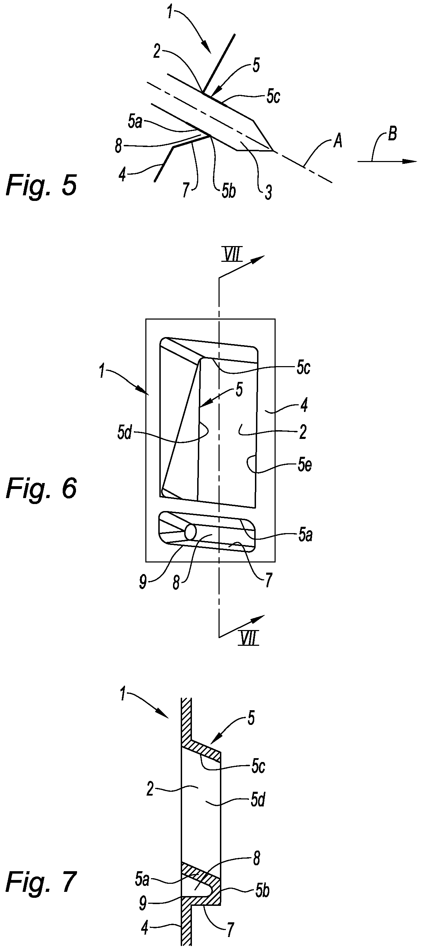

La pièce moulée 1, représentée sur les figures 5 à 7, comporte une paroi 4 présentant un trou 2 réalisé lors du moulage de cette pièce.

Le trou 2 est destiné à recevoir un pilote 3 (voir figure 5) pour assembler sur la pièce moulée 1 une autre pièce (non représentée).

Le trou 2 est entouré par une borduré 5 pour guider l'engagement du pilote 3 suivant l'axe A du trou 2.

La bordure 5 comporte une zone 5a dans laquelle une partie de la bordure est en contre-dépouille par rapport à l'axe B de démoulage.

Conformément à l'invention, dans la zone 5a l'extrémité 5b de la bordure est raccordée à la paroi 4 de la pièce 1 par une partie de liaison 7 qui n'est pas en contre-dépouille par rapport à l'axe B de démoulage.

Cette partie de liaison 7 forme avec la partie 5a de la bordure un évidement 8 qui débouche sur la surface extérieure de la paroi 4.

La figure 7 montre en particulier que la partie de liaison 7 présente une épaisseur qui est sensiblement identique à celle de la bordure 5, y compris de la partie de bordure 5a en contre-dépouille.

Dans l'exemple de la figure 6, ledit trou 2 est rectangulaire et est entouré par une bordure 5 composée de quatre éléments de bordure 5a, 5c, 5d et 5e.

L'élément 5a, déjà mentionné plus haut, forme un angle avec l'axe de démoulage B, tel qu'il est en contre-dépouille.

L'extrémité 5b de cet élément 5a est raccordée avec la paroi 4 de la pièce 1 par un élément de liaison 7 formant un angle avec la partie 5a de la bordure, tel que cet élément de liaison 7 ne soit pas en contre-dépouille par rapport à l'axe de démoulage B.

Cet élément de liaison 7 forme avec la paroi 4 un évidement 8 qui débouche sur la surface extérieure de la paroi 4 par une ouverture rectangulaire 9 située sous le trou 2.

La figure 7 montre que l'évidement 8 présente dans un plan perpendiculaire à la paroi 4, situé dans le plan de la figure 1, une section sensiblement en V.

La figure 7 montre également que l'épaisseur de la paroi 4, l'épaisseur des quatre éléments de bordure 5a, 5c, 5d, 5e et l'épaisseur de l'élément de liaison 7 sont sensiblement identiques.

La pièce moulée 1 représentée sur les figures 5 à 7 peut, grâce à l'élément de liaison 7, être obtenue au moyen d'un moule simple et peu onéreux composé de deux parties séparables suivant un axe B différent de l'axe A d'engagement du pilote 3 dans le trou 2 de la pièce moulée 1.

Par ailleurs, grâce à l'évidement 8 formé entre l'élément de bordure 5a et l'élément de liaison 7, les épaisseurs de la paroi 4 et des éléments ci-dessus peuvent être identiques, ce qui permet un refroidissement rapide et homogène de la pièce moulée et de ce fait permet de réduire la durée de fabrication et le coût des pièces.

La présente invention est applicable dans tous les domaines de l'industrie et en particulier aux pièces moulées en matière plastique ou en métal pour les véhicules automobiles.

## Revendications

1. Pièce moulée comportant une paroi (4) présentant un trou (2), suivant un axe (A), réalisé lors du moulage de cette pièce, ledit trou (2) étant destiné à recevoir un pilote (3) pour assembler sur ladite pièce moulée (1) une autre pièce, ledit trou (2) étant entouré par une bordure (5), située sur l'un des côtés de la paroi (4), pour guider l'engagement du pilote (3) dans ledit trou (2) selon l'axe (A) dudit trou (2), la bordure (5) présentant une zone (5a) formant un angle avec la paroi (4) dont l'extrémité (5b) est raccordée à ladite paroi (4) par une partie de liaison (7) formant avec ladite zone (5a) de la bordure un évidement (8) qui débouche sur la surface de la paroi (4) opposée à la bordure (5) et qui présente dans un plan perpendiculaire à ladite paroi (4), une section sensiblement en V, de sorte que la pièce moulée (1) est obtenue au moyen d'un moule composé de deux parties séparables suivant un axe (B) de démoulage différent de l'axe (A) du trou (2) de la pièce moulée, ladite zone (5a) de bordure formant un angle avec la paroi (4) est en contre-dépouille par rapport à l'axe (B) de démoulage, et l'élément de liaison (7) n'est pas en contre-dépouille par rapport à l'axe (B) de démoulage.

2. Pièce moulée selon la revendication 1, **caractérisée en ce que** ladite partie de liaison (7) présente une épaisseur qui est sensiblement identique à celle de ladite bordure (5).

3. Pièce moulée selon l'une des revendications 1 ou 2, **caractérisée en ce que** ledit trou (2) est rectangulaire et est entouré par une bordure (5) composée de quatre éléments de bordure (5a, 5c, 5d, 5e), l'un (5a) de ces éléments formant un angle avec l'axe (B) de démoulage, tel qu'il est en contre-dépouille par rapport à cet axe (B), l'extrémité (5b) de cet élément (5a) étant raccordée avec ladite paroi (4) par un élément de liaison (7) formant un angle avec ledit élément (5a) tel que cet élément de liaison (7) ne soit pas en contre-dépouille par rapport à l'axe (B) de démoulage et cet élément de liaison (7) formant avec ladite paroi (4) un évidement (8) qui débouche sur la surface extérieure de la paroi (4).

4. Pièce moulée selon la revendication 3, **caractérisée en ce que** ledit évidement (8) débouche sur ladite surface de la paroi (4) par une ouverture rectangulaire (9).

5. Pièce moulée selon l'une des revendications 3 à 4, **caractérisée en ce que** l'épaisseur de ladite paroi (4), l'épaisseur des quatre éléments de bordure (5a, 5c, 5d, 5e) et l'épaisseur dudit élément de liaison (7) sont sensiblement identiques.

## Patentansprüche

1. Gussteil, das eine Wand (4) umfasst, die ein Loch (2) entlang einer Achse (A) aufweist, das bei dem Gießen dieses Teils hergestellt wird, wobei das Loch (2) dazu bestimmt ist, eine Führung (3) aufzunehmen, um auf dem Gussteil (1) ein anderes Teil zusammenzufügen, wobei das Loch (2) von einem Rand (5) umgeben ist, der auf einer der Seiten der Wand (4) liegt, um den Eingriff der Führung (3) in das Loch (2) entlang der Achse (A) des Lochs (2) zu führen, wobei der Rand (5) eine Zone (5a) bildet, die einen Winkel mit der Wand (4) bildet, deren Ende (5b) an die Wand (4) durch einen Verbindungsteil (7) angeschlossen ist, der mit der Zone (5a) des Rands eine Aussparung (8) bildet, die auf der Oberfläche der Wand (4), die dem Rand (5) entgegengesetzt ist, mündet, und die in einer Ebene senkrecht zu der Wand (4) einen im Wesentlichen V-förmiges Abschnitt derart aufweist, dass das Gussteil (1) mittels einer Form erhalten wird, die aus zwei Teilen besteht, die entlang einer Ausformachse (B), die von der Achse (A) des Lochs (2) des Gussteils unterschiedlich ist, trennbar sind, wobei die Randzone (5a), die einen Winkel mit der Wand (4) bildet, in Bezug auf die Ausformachse (B) in Hinterschnitt ist, und das Verbindungselement (7) in Bezug auf die Ausformachse (B) nicht in Hinterschnitt ist.

2. Gussteil nach Anspruch 1, **dadurch gekennzeichnet, dass** der Verbindungsteil (7) eine Stärke aufweist, die im Wesentlichen mit der des Rands (5) identisch ist.

3. Gussteil nach einem der Ansprüche 1 oder 2, **dadurch gekennzeichnet, dass** das Loch (2) rechteckig ist und von einem Rand (5) umgeben ist, der aus vier Randelementen (5a, 5c, 5d, 5e) besteht, wobei eines (5a) dieser Elemente einen Winkel mit der Ausformachse (B) derart bildet, dass es in Bezug auf diese Achse (B) im Hinterschnitt ist, wobei das Ende (5b) dieses Elements (5a) an die Wand (4) durch ein Verbindungselement (7) angeschlossen ist, das einen Winkel mit dem Element (5a) derart bildet, dass dieses Verbindungselement (7) in Bezug auf die Ausformachse (B) nicht in Hinterschnitt ist, und dieses Verbindungselement (7) mit der Wand (4) eine Aussparung (8) bildet, die auf der Außenoberfläche der Wand (4) mündet.

4. Gussteil nach Anspruch 3, **dadurch gekennzeichnet, dass** die Aussparung (8) auf der Oberfläche der Wand (4) durch eine rechteckige Öffnung (9) mündet.

5. Gussteil nach einem der Ansprüche 3 bis 4, **dadurch gekennzeichnet, dass** die Stärke der Wand (4), die Stärke der vier Randelemente (5a, 5c, 5d, 5e) und die Stärke des Verbindungselements (7) im Wesentlichen identisch sind.

## Claims

1. A moulded part comprising a wall (4) having a hole (2), along an axis (A), produced during the moulding of this part, said hole (2) being intended to receive a guide (3) for assembling another part on said moulded part (1), said hole (2) being surrounded by an edge (5), situated on one of the sides of the wall (4), for guiding the engagement of the guide (3) in said hole (2) along the axis (A) of said hole (2), the edge (5) having a zone (5a) forming an angle with the wall (4), the end (5b) of which is connected to said wall (4) by a connecting part (7) forming with said zone (5a) of the edge a recess (8) which opens out on the surface of the wall (4) opposed to the edge (5) and which has, in a plane perpendicular to said wall (4), a substantially V-shaped section, so that the moulded part (1) is obtained by means of a mould composed of two separable parts along a demoulding axis (B) different from the axis (A) of the hole (2) of the moulded part, said edge zone (5a) forming an angle with the wall (4) is undercut with respect to the demoulding axis (B), and the connecting element (7) is not undercut with respect to the demoulding axis (B).

2. The moulded part according to Claim 1, **characterized in that** said connecting part (7) has a thickness which is substantially identical to that of said edge (5).

3. The moulded part according to one of Claims 1 or 2, **characterized in that** said hole (2) is rectangular and is surrounded by an edge (5) composed of four edge elements (5a, 5c, 5d, 5e), one (5a) of these elements forming an angle with the demoulding axis (B), such that it is undercut with respect to this axis (B), the end (5b) of this element (5a) being connected with said wall (4) by a connecting element (7) forming an angle with said element (5a) such that this connecting element (7) is not undercut with respect to the demoulding axis (B) and this connecting element (7) forming with said wall (4) a recess (8) which opens out on the exterior surface of the wall (4).

4. The moulded part according to Claim 3, **characterized in that** said recess (8) opens out on said surface of the wall (4) by a rectangular opening (9).

5. The moulded part according to one of Claims 3 to 4, **characterized in that** the thickness of said wall (4), the thickness of the four edge elements (5a, 5c, 5d, 5e) and the thickness of said connecting element (7) are substantially identical.
